Europäisches Patentamt

European Patent Office

Office européen des brevets

(19)

Publication number: **0 298 136**

**A1**

# EUROPEAN PATENT APPLICATION

(21) Application number: 87106480.4

(22) Date of filing: 05.05.87

(51) Int. Cl.⁴: **C05G 1/00 , C05F 11/10**

Amended claims in accordance with Rule 86 (2) EPC.

(43) Date of publication of application:
**11.01.89 Bulletin 89/02**

(84) Designated Contracting States:
**AT BE CH DE ES FR GB GR IT LI SE**

(71) Applicant: **Pajenk, Francek**
**Reboljeva 3**
**YU-61000 Ljubljana(YU)**

Applicant: **Cormet Aktiengesellschaft mbH**
**Stresemannstrasse 17**
**D-6240 Königsstein /Ts.(DE)**

(72) Inventor: **Pajenk, Francek D.Sc.**
**Reboljeva 3**
**YU-61000 Ljubljana(YU)**

(74) Representative: **Hansen, Bernd, Dr.rer.nat. et al**
**Hoffmann, Eitle & Partner Patentanwälte**
**Arabellastrasse 4**
**D-8000 München 81(DE)**

(54) Universal organomineral and biostimulating fertilizer and a method for the manufacture thereof.

(57) There is provided a novel universal organomineral and biostimulating fertilizer comprising an organic component, based on a material containing humic acid or on a material containing cellulose, a mineral component, microelements and biostimulants.

There is also provided a new method for the manufacture of the fertilizer.

The novel fertilizer improves the fertility and the structure of the soil as well as the yield of the crop and does not pollute the overground or underground water.

EP 0 298 136 A1

# UNIVERSAL ORGANOMINERAL AND BIOSTIMULATING FERTILIZER AND A METHOD FOR THE MANUFACTURE THEREOF

The present invention relates to a novel universal organomineral and biostimulating fertilizer and to a method for the manufacture thereof. In accordance with the present invention, it is possible to produce a fertilizer comprising an organic component for the renewal of humus in the soil, a mineral component being a source of N, $P_2O_5$ and $K_2O$, microelements such as Cu, Fe, Co, Mg, Mo etc., and biostimulants such as riboflavin, allantoin, folic acid, glutamic acid, tryptophane, allantoic acid, adenine etc. Owing to its composition, the fertilizer improves the fertility and the structure of soil and provides a simultaneous incorporation of all substances necessary to the soil and the plants in a single fertilizing step. The fertilizer has an enhanced, i.e. synergistic action of the compounds, resulting in a for up to 70 % improved activity in comparison with prior art mineral fertilizers. In the continuation the present inventive fertilizer will be designated as OMB fertilizer (organomineral and biostimulating fertilizer).

The present invention also relates to a method for the manufacture of the universal organomineral and biostimulating fertilizer consisting of several technological steps, wherein the sequence of said steps is always the same, irrespective of the specific choice of the components of the fertilizer.

In agriculture nowadays, for improving the fertility of soil there are generally used organic fertilizers on the basis of farmyard manure and "green manuring". The farmyard manure is scarce and expensive, whereas the green manuring requires the sacrificing of crops on fertile areas. Nowadays, there are predominantly used mineral fertilizers for improving the crop but they exert an extremely negative action on the fertility and the structure of the soil and additionally pollute the overground and the underground water.

Therefore it is necessary that, in addition to the mineral fertilizers which are, in fact, nutrients for the plants, there are also incorporated into the soil organic substances which renew its organohumic component and improve the fertility of the soil.

For this reason there should be provided a fertilizer comprising an organic component in addition to the mineral one and making possible a single-step incorporation of the nutrient for the plants in the form of the mineral component and of the organic component for the renewal of the humus in the soil. Such organomineral fertilizers are known e.g. from Yugoslavian patents 33,103 and 34,532.

Known solutions provide for the incorporation of the organic component for the renewal of humus in combination with the mineral component of the fertilizer, which is a source of N, $P_2O_5$ and $K_2O$; they have, however, several disadvantages.

Known organomineral fertilizers are based on lignite and brown coal as the organic component, therefore their use depends on the availability of lignite and brown coal resp.

Furthermore, the known fertilizers - the organomineral as well as the simple mineral ones - lack biostimulants, which have recently been found to be of essential importance as they substantially influence the development of the plants and, accordingly, the yield of the crops. Thus, in addition to known mineral or organomineral fertilizers, there should also be separately incorporated into the soil biostimulants comprising e.g. riboflavin $C_{17}H_{20}N_4O_6$, adenine $C_5H_5N_5$, allantoin $C_4H_6N_4O_3$, tryptophane $C_{11}H_{12}N_2O_2$, folic acid $C_{19}H_{19}N_7O_6$, glutamic acid $C_5H_9NO_4$, allantoinic acid $C_4H_8N_4O_4$, orcialanine $C_9H_{11}NO_5$ etc. The known incorporation of biostimulants into the soil by means of a separate working step, however, has several drawbacks. Namely, the biostimulants should be added in extremely small quantities.

Thus, there arise several problems: the ecological problem, the biological problem of a uniform incorporation into the soil, the problem of a timely and specifically directed gradual transfer from the soil into the plants, and, finally, the economical problem due to the losses during the application and the utilization of expensive biostimulants.

It can be concluded from the above description of the state of art that hitherto there has not been provided any artificial fertilizer that would combine all components needed by the plants and the soil, i.e. the organic component, the mineral component, the biostimulants and the microelements, for a combined application.

The object of the present invention is to remedy the aforesaid disadvantages of the known mineral and organomineral fertilizers and to provide a universal organomineral and biostimulating fertilizer (designated as OMB fertilizer), which will make it possible to perform the simultaneous incorporation of the organic component, the mineral component, the biostimulants and the microelements without ballast carriers in a single fertilizing operation. The organic component is not limited to lignite or brown coal but may also be a material on the basis of cellulose, e.g. wood, especially wood waste or wood ashes, peat, straw, and other available and economical sources.

A further object of the present invention is to reduce the number of the required working steps in the application of the fertilizer; additionally, the fertilizer achieves a synergistic effect in the simultaneous action of all components, resulting in a 70 % improvement of the effect in comparison with prior art fertilizers.

A further object of the present invention is a new method for the manufacture of the universal OMB fertilizer in a technically advantageous and simple manner that comprises an unvariable sequence of manufacturing operations, wherein the physical parameters may be varied in accordance with the specific composition of the organic component and the added reactants as well as with the intended use of the product.

According to the present invention, the above-cited objects are achieved by the universal organomineral and biostimulating (OMB) fertilizer, comprising an organic component, the usual mineral components being the source of N, $P_2O_5$ and $K_2O$ as well as various biostimulants and microelements.

The present invention will be described and explained in detail by means of a drawing, which schematically represents the manufacturing steps and the sequence thereof in the manufacture of the universal OMB fertilizer.

The starting mixture should comprise min. 70 % (mass/mass) of the organic component, most suitably about 80 % (mass/mass) and 0.2 to 0.5 % (mass/mass) of the biostimulants, calculated on the dry substance. The remainder ad 100 % consists of the mineral component and of the source of microelements.

The preferred basic organic component of the present OMB fertilizer is an organic substance comprising humic acids that are identical or analogous to the humic acids in the humus of the soil and possess a porous structure. Such substances are e.g. lignite, brown coal, peat etc.

There may be preferably used such organic substances that have a minimum absorption capacity of 250 ml/100 g and a specific buffer capacity within a pH of 2 to 6. Said organic component is ground in a mill 1 into a fraction wherein the particle size is within the range of 0.01 to 3 mm. The organic compound should be dried to a water content of max. 25 % before the introduction into the mill. The ground organic component is transferred from the mill 1 into a doser 2, from which the dosed quantities thereof are transferred into a mixing reactor 3. Through dosers 21a, 21b, 21c etc. there are also fed into said mixing reactor 3 dosed quantities of the reactants that are source of N, $P_2O_5$ and $K_2O$, e.g. $NH_4$-compounds, $HNO_3$, KOH, KCl $K_2SO_4$, $H_3PO_4$, raw phosphates and the like. The dosed quantities of the organic component and of the added reactants being the sources of N, $P_2O_5$ and $K_2O$ depend on the desired composition of the final product.

Through the dosers 22a, 22b, 22c etc. there are also introduced into the mixing reactor 3 predetermined quantities of the reactants that are the sources of microelements, e.g. Cu, Zn, Mg, Fe, B, Mo, Co, in the form of sulfides, oxides and carbonates.

In the mixing reactor 3 there is performed an exothermic reaction at a temperature within the range of 35° to 52° C, predominantly at about 45° C. The reaction is conducted at an intimate stirring of the components, preferably at 220 to 280 rev./min.

From the mixing reactor 3 a loose or partially granulated product is fed into a granulator 4, wherein the product is granulated under the addition of a predetermined quantity of biostimulants, which become homogenously distributed therein. As a rule, the biostimulants should not be fed into the mixing reactor 3 as this would result in a chemical reaction between the biostimulants and the other supplied reactants.

The granulate is transferred from the granulator 4 into a drier 5, where it is dried to a humidity of about 16 %. The drying temperature should not exceed 70° C to avoid the decomposition of the product.

The dried granulate is finally cooled and thus there is obtained the universal organomineral biostimulating fertilizer.

There are presented some working Examples for various embodiments of the present universal OMB fertilizer and for the performance of its manufacture, which, however, are only given as an illustration of the present invention without limiting its scope in any way.

## Working Examples

The manufacturing process was performed in an EP Type MPK R07 reactor, acting simultaneously as mixer and granulator.

On the organic component - lignite (peat, sawdust) of a fraction within 0 and 3 mm - there were dosed the solid chemicals (urea, K-salt, Thomas slag etc.) under stirring at 250 to 300 rev./min. during 1 to 2 minutes.

The liquid components were dosed stepwise, subsequently to the solid components: at first KOH for about 2 minutes and then orthophosphoric acid for 6 minutes at 250 to 300 rev./min.

The dosing of the liquid and gaseous reactants resulted in an exothermic reaction. which increased the temperature to 45° to 49° C.

The manufacture proceeded by the stepwise addition of the microelements according to the recipes disclosed in the following Table. The dosing under the simultaneous stirring was performed in about 2 minutes. The process was concluded by the addition of heteroauxins and stimulants from the bios group. The dosing thereof under simultaneous stirring was performed in about 3 minutes.

The reaction was conducted at continuous stirring (250 to 300 rev..min.) for about 10 to 15 minutes.

After the performed reaction the yielded granulate was subjected to sieving (sieves of ⌀ 2 mm and ⌀ 5 mm).

The fractions under 2 mm and over 5 mm were recycled, whereas the final product of the particle size of 2 to 5 mm was dried at a max. temperature of 70° C.

The product was dried to a max. residue of 10-16% of water.

In the following Table there are presented three different embodiments of the present invention. wherein the working steps were performed in the above-defined manner.

Table (Working Examples)

|  | Example I | Example II | Example III |
|---|---|---|---|
| Mineral NPK | 8:8:8 + Zn+B+HA+BG | 4:8:14 + Cu+Fe+HA+BG | 4:14:8 + Mg+Mn+HA+BG |
| Mineral | 40 % | 10 % | 15 % |
| $H_3PO_4$ 70-75 % / 51-54 % $P_2O_5$ | 3 kg | 0,75 kg | 2 kg |
| KOH 50-60 % / 42-51 % $K_2O$ | 3,5 kg | 1,5 kg | 1,3 kg |
| Thomas slag 16 % $P_2O_5$ | 10 kg | 2,5 kg | 6,5 kg |
| Potassium salt 40 % $K_2O$ | 4 kg | 1,75 kg | 1,5 kg |
| Urea 46 % N | 7 kg | 1 kg | 1,3 kg |
| ========================================================= |
| Additives | 27,5 kg | 7,5 kg | 12,6 kg |
| Coal | 72,5 kg | 92,5 kg | 87,4 kg |
| Water from $H_3PO_4$ | 0,9 kg | 0,22 kg | 0,60 kg |
| Water from KOH | 1,75 kg | 0,75 kg | 0,65 kg |
| Water from coal | 17,35 kg | 19,03 kg | 18,75 kg |
| Dry coal | 55,20 kg | 73,47 kg | 68,65 kg |
| Pitcoal | 110,40 kg | 146,94 kg | 137,30 kg |
| ========================================================= |
| Total $H_2O$ kg | 57,85 | 74,44 | 69,90 |
| Total kg | 137,9 | 154,40 | 149,90 |
| ========================================================= |

| Microelements | ZnS | 4,00 kg | CuSO$_4$ 1,5 kg | Mg | 4,5 kg |
|---|---|---|---|---|---|
| | Borax | 3,00 kg | FeS$_2$ 1,0 kg | MnO$_2$ | 1,2 kg |

| | | | |
|---|---|---|---|
| HA | 120 g | 120 g | 110 g |
| BG | 100 g | 100 g | 95 g |

HA = heteroauxins

BG = bios group

The performed experiments showed that the fertility and the structure of the soil and the yield of the crop were improved in a remarkable manner by the use of the OMB fertilizer. The obtained results exceed, even for 70 %, the results achieved by the use of prior art artificial mineral fertilizers, which in the long term -as explained in the introductory part of this specification -also deteriorate the structure and the fertility of the soil as they impede the renewal of humus. Such a synergistic action of the OMB fertilizer is made possible by the simultaneous penetration and action of the poly-phenolic, chinoidic and other groups on the cells of the plants exposed to the fertilizer. Therefore there is also achieved a direct stimulating effect on the regeneration of the nucleoside-diphosphate into the nucleoside-triphosphate, which in turn influences the synthesis rate of the complete system DNK-RNK.

In view of the presented results it can be concluded that the present invention achieves all previously defined objects and avoids the drawbacks of the prior art solutions.


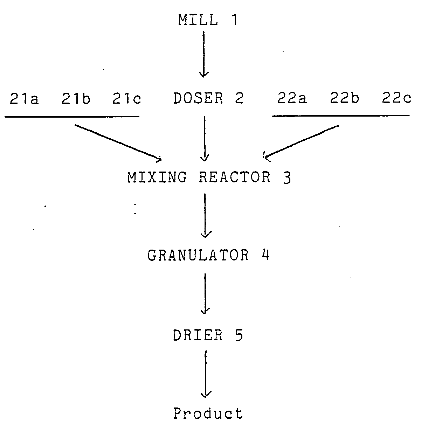

**Claims**

1. A method for the manufacture of a universal organomineral and biostimulating fertilizer, characterized in that the organic component of the fertilizer on the basis of humic acids, chosen from the group comprising lignite, brown coal, a mixture of brown coal and gangue, peat or a material on the basis of cellulose, chosen from the group of wood, straw or mixtures of said substances, is predried to a moisture content of max. 25 % and possesses a min. absorption capacity of 250 ml/100 g and a buffer capacity of pH 2-6, is then ground into a fraction of 0.01 to 3 mm, whereupon this organic compound is reacted with reactants that are the source of N, P$_2$O$_5$ and K$_2$O and with reactants that are the sources of microelements Cu, Fe, Mg, Mo, Co and B, at a temperature within the range of 35° to 52° C and under stirring at 220 to 280 rev. min., whereupon the obtained loose or partially granulated product is granulated under the simultaneous addition of biostimulants chosen from the group comprising riboflavin, allatoin, adenine, tryptophane, folic acid, glutamic acid, alantoic acid and orcialanine, and finally the product is dried at a temperature not exceeding 70° C.

2. A method as claimed in claim 2, characterised in that the starting mixture comprises min. 70 % (mass/mass) of the organic component, 0.2 to 0.5 % (mass/mass) of the biostimulants, calculated on the dry substance, and the remainder ad 100 % consists of the mineral component and of sources of microelements.

3. A universal organomineral and biostimulating fertilizer, characterized in that it can be manufactured by the method defined in claims 1 and 2.


Amended claims in accordance with Rule 86(2) EPC.


1. A method for manufacturing an organomineral fertilizer comprising the steps of:

predrying an organic substance comprising either a source of humic acids selected from at least one of lignite, brown coal, or peat, or a source of cellulose selected from at least one of wood or straw such that it contains a maximum moisture content of 25%, possesses a minimum absorption capacity of 250 ml/100g, and has a buffer capacity of pH 2-6;

grinding the predried organic substance to a particle size of 0.01 to 3mm;

reacting the ground substance with compounds forming sources of N, P$_2$O$_5$, K$_2$O, and compounds

forming sources of microelements Cu, Fe, Mg, Mo, Co and B at a temperature of from 35° to 52°C with accompanying stirring;

granulating the loose or partially granulated product in the presence of at least one biostimulant selected from riboflavin, allantoin, adenine, tryptophane, folic acid, glutamic acid, allantoic acid and orcialanine; and

drying the granulated product at a temperature of up to 70°.

2. A method according to claim 1 wherein the stirring is carried out at 220 to 280 rev·min.

3. A method according to claim 1 or claim 2 wherein the organic substance comprises a mixture of brown coal and gangue.

4. An organomineral fertilizer produced by a method according to any preceding claim.

5. An organomineral fertilizer according to claim 4 comprising at least 70% by weight of the organic substance, 0.2-0.5% by weight of the at least one biostimulant, the balance being made up of the mineral compounds and compounds forming sources of the microelements.

6. An ogranomineral fertilizer according to claim 5 comprising at least 80% by weight of the organic substance.

MILL 1

↓

21a   21b   21c    DOSER 2    22a   22b   22c

MIXING REACTOR 3

↓

GRANULATOR 4

↓

DRIER 5

↓

Product

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 193 798  (A. DALLE)<br>* Claims * | 3 | C 05 G  1/00<br>C 05 F  11/10 |
| A | | 1 | |
| A | CH-A- 329 054  (F. MICHELER)<br>* Page 1; page 3, lines 5-11; claims * | 3 | |
| A | FR-A-1 217 846  (S.-G. DZIEDZIC et al.)<br>* Abstract * | 3 | |
| A | US-A-4 169 716  (H.H. ASHMEAD) | | |

TECHNICAL FIELDS
SEARCHED (Int. Cl.4)

C 05 F
C 05 G
C 05 D
A 01 G

The present search report has been drawn up for all claims

| Place of search | Date of completion of the search | Examiner |
|---|---|---|
| THE HAGUE | 27-01-1988 | SCHUT,R.J. |

EPO FORM 1503 03.82 (P0401)